(19) **Europäisches Patentamt / European Patent Office / Office européen des brevets**

(11) **EP 1 742 101 A1**

(12) # EUROPEAN PATENT APPLICATION
published in accordance with Art. 158(3) EPC

(43) Date of publication:
**10.01.2007 Bulletin 2007/02**

(51) Int Cl.:
***G02F 1/1335*** (2006.01)

(21) Application number: **05719798.0**

(22) Date of filing: **02.03.2005**

(86) International application number:
**PCT/JP2005/003483**

(87) International publication number:
**WO 2005/093500 (06.10.2005 Gazette 2005/40)**

(84) Designated Contracting States:
**DE FR**

(30) Priority: **25.03.2004 JP 2004090189**

(71) Applicant: **SHARP KABUSHIKI KAISHA**
**Osaka-shi, Osaka 545-8522 (JP)**

(72) Inventors:
• **OKADA, Kuniaki**
**Nara 632-0033 (JP)**

• **NAKANISHI, Hiroshi**
**Kyoto 614-8279 (JP)**

(74) Representative: **Müller - Hoffmann & Partner**
**Patentanwälte**
**Innere Wiener Strasse 17**
**81667 München (DE)**

(54) **DISPLAY PANEL AND METHOD FOR MANUFACTURING SAME**

(57)     A microlens array 1' constituted of a plurality of microlenses 1 each having a flat section 1a at a top portion is arranged on one side of a liquid crystal display panel 11 from which side light from a backlight enters. Each microlens 1 is so formed that its width is equal to the pixel pitch. Consequently, the viewing angle can be widened without deteriorating front luminance.

FIG. 2 (a)

EP 1 742 101 A1

## Description

TECHNICAL FIELD

The present invention relates to a non self-illuminant type display panel and a method for manufacturing the display panel, and particularly, relates to a display panel including a microlens array that is provided to improve light utilization efficiency, and a method for manufacturing the display panel.

BACKGROUND ART

In recent years, liquid crystal display apparatuses, which are non self-illuminant type display apparatuses, have been widely used as display apparatuses of monitors, projectors, mobile information terminals, mobile phones and the like. A non self-illuminant type display apparatus, exemplified by a liquid crystal display apparatus, displays images and/or texts normally by causing a drive signal to change a transmissivity (or reflectivity) of the display panel to modulate an intensity of light emitted from a light source with respect to the display panel. Examples of the display apparatus includes: a direct-view type display apparatus which allows direct observation of images and the like that are displayed on a display panel; and a projection type display apparatus (projector) which allows enlarging and projecting, on a screen, images and the like that are displayed on a display panel, by use of a projection lens. Other known non self-illuminant type display apparatuses besides the liquid crystal display apparatus include an electrochromic display apparatus, an electrophoretic display apparatus, a toner display apparatus, a PLZT display apparatus and the like.

In the liquid crystal display apparatus, a drive voltage corresponding to an image signal is applied to respective pixels arranged regularly in matrix, so as to change optical characteristics of liquid crystal layers of the pixels, respectively. By this way, images, texts and the like are displayed. There are a simple matrix method and an active matrix method for individually applying a drive voltage to each pixel. With regard to an active-matrix type liquid crystal display panel, a wiring is necessary for supplying a drive voltage to a switching device and the pixel electrode. A non-linear two-terminal device, such as an MIM (metal-insulator-metal) device, or a three-terminal device, such as a TFT (thin film transistor) device, is used as the switching device.

Meanwhile, in the active-matrix type liquid crystal display apparatus, if strong light enters a switching device (especially TFT) of a display panel, an element resistance decreases in an OFF state. This causes a discharge of electric charges that were charged in a sub-pixel capacitor when a voltage was applied. As a result, a targeted display state is not realized. This causes a leakage of light during a black state, and therefore a contrast ratio decreases.

In view of the foregoing, in an active-matrix type liquid crystal display panel, a light shielding layer (referred to as black matrix) is provided to a TFT substrate including a TFT and a pixel electrode, or an opposed substrate facing the TFT substrate via the liquid crystal layer, for the purpose of preventing light from entering the TFT (especially channel region), for example.

In the case of a reflective type liquid crystal display apparatus, an effective pixel area would not be reduced if a reflection electrode is used as the light shielding layer. On the other hand, in a liquid crystal display that utilizes transmitted light for displaying, a light shielding layer is provided, in addition to a TFT that does not transmit light, a gate bus line, and a source bus line. In this case, the effective pixel area is reduced, and therefore a proportion of the effective pixel area with respect to the entire area of the display region decreases. In other words, an aperture ratio decreases.

This tendency becomes significant, as the liquid crystal display panel becomes smaller and highly finer. The reason therefor is that, although a pixel pitch is reduced, sizes of the TFT, the bus line and the like cannot be reduced to a smaller size than a certain size, due to constrains of electrical performance, manufacture techniques and the like.

In recent years, transflective liquid crystal display apparatuses have been popularly used in mobile apparatuses, such as mobile phones. Under dark illumination, the transflective liquid crystal display apparatus realizes a display by utilizing light of a backlight, which light transmits through a liquid crystal display panel. On the other hand, under bright illumination, the transflective liquid crystal display apparatus realizes a display by reflecting light that enters a display surface from the surrounding area. The transflective liquid crystal display apparatus includes pixels each having a region (reflective region) where a display is realized in a reflection mode, and a region (transmissive region) where a display is realized in a transmission mode. If a pitch of the pixels is reduced, a ratio of an area of the transmissive region with respect to the entire area of the display region (aperture ratio of transmitting region) decreases significantly. For this reason, the transflective liquid crystal display apparatus has an advantage that a display is realized with a high contrast ratio regardless of brightness in the surrounding area, but has a problem that luminance decreases if the aperture ratio decreases in the transmissive region.

In view of the circumstance, Japanese Unexamined Patent Publication No. 109417/1999 (Tokukaihei 11-109417) (publication date: April 23, 1999) teaches one way of improving light utilization efficiency of a transflective liquid crystal display apparatus. Specifically, a microlens is provided to a liquid crystal display panel for the purpose of converging light and focusing the light on respective pixels. By this way, an effective aperture ratio of the liquid crystal display panel is increased.

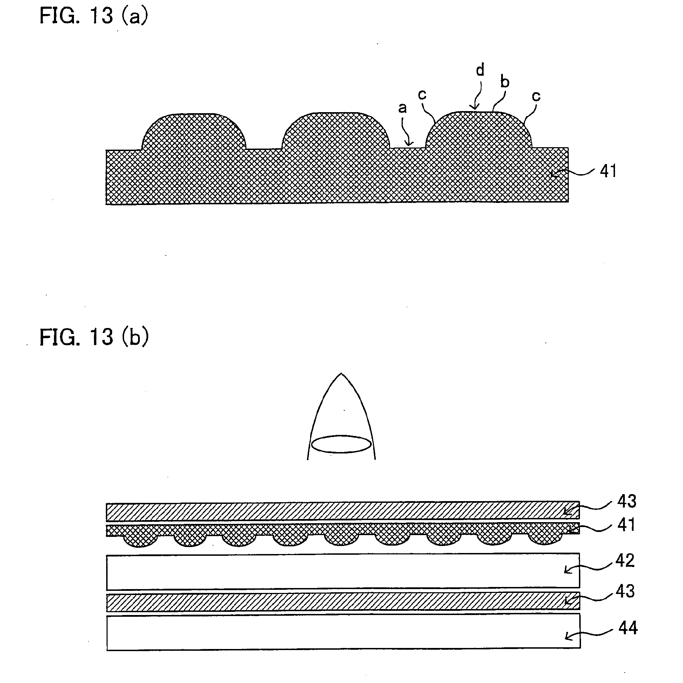

Further, Japanese Unexamined Patent Publication No. 49925/ 1997 (Tokukaihei 9-49925) (publication date: February 18, 1997) teaches a technique for enlarging a viewing angle of a liquid crystal display without decreasing a front luminance. Figure 13(b) is a cross sectional diagram illustrating a structure of the liquid crystal display disclosed in Japanese Unexamined Patent Publication No. 49925/1997 (Tokukaihei 9-49925). As illustrated in the figure, the liquid crystal display of Japanese Unexamined Patent Publication No. 49925/1997 (Tokukaihei 9-49925) includes a viewing-angle enlarging film 41 and a polarizer 43 that are provided, in the order as listed, to a TN-liquid crystal cell 42 on its observer's side. The liquid crystal display also includes a polarizer 43 and a backlight 44 that are provided, in the order as listed, to a rear surface of the TN-liquid crystal cell 42.

Figure 13(a) is a cross sectional diagram illustrating a shape of a cross section of the viewing-angle enlarging film 41 that is provided to the liquid crystal display of Japanese Unexamined Patent Publication No. 49925/1997 (Tokukaihei 9-49925). As illustrated in the figure, the viewing-angle enlarging film 41 includes a plurality of convex sections d, each of which is constituted of an upper flat section b and a curving slope section c, and a smooth section a that is provided between every adjacent ones of the convex sections d.

In the structure of Japanese Unexamined Patent Publication No. 49925/1997 (Tokukaihei 9-49925), a light beam that passes through the smooth section a or the upper flat section b transmits to a front, whereas a light beam that passes through the curving slope section c is bent and then emitted. This causes a viewing angle to be enlarged. Specifically, the viewing-angle enlarging film 41 includes a convex section d and a smooth section a that are formed alternately on a base material. A light beam that transmits through the smooth section a is emitted to a front without bending, whereas a light beam that transmits through the convex section d is bent and then emitted. This makes it possible to enlarge the viewing angle. Therefore, without causing an image on the front of a screen of the liquid crystal display to become dimmer, (i) a viewing angle of the screen is enlarged in the vertical direction, and (ii) gray level inversion is prevented that may occur when the screen is observed from an oblique direction.

Meanwhile, a liquid crystal panel used in a projection-type apparatus is small in a panel size and an aperture ratio for the purpose of increasing an yield of liquid crystal panels. Specifically, the panel size is approximately one inch in diagonal, and the aperture ratio is approximately 50%. However, a wiring area that occupies a section of pixels remains the same, regardless of the pixel size. Therefore, light utilization efficiency needs to be improved in the liquid crystal panel used in the projection-type apparatus. There has been introduced since a long time ago a technique in which a microlens array is provided to improve the efficiency. For example, Japanese Unexamined Patent Publication No. 2003-294912 (publication date: October 15, 2003) teaches a projection-type liquid crystal display apparatus to which a two-layer microlens array is provided for the purpose of improving light utilization efficiency.

The technique of Japanese Unexamined Patent Publication No. 109417/1999 (Tokukaihei 11-109417) mentioned above, however, has a problem that a display of the liquid crystal display apparatus becomes darker, and therefore visibility is degraded. Specifically, the technique of Japanese Unexamined Patent Publication No. 109417/1999 (Tokukaihei 11-109417) uses a microlens having a spherical shape. In this case, light that is emitted from a backlight and then enters the microlens is emitted in a vertical direction with respect to a display surface of the liquid crystal panel, only if the light enters the microlens via the vicinity of a top area (tilt angle 0°) of the microlens. Thus, the front luminance of the liquid crystal panel decreases. Consequently, the display of the liquid crystal display apparatus becomes darker, and therefore the visibility is degraded. If a backlight with a higher directivity is used, the front luminance increases, but the viewing angle becomes narrower.

Further, the technique of Japanese Unexamined Patent Publication No. 49925/1997 (Tokukaihei 9-49925) mentioned above has a problem that an image contrast is degraded due to residual birefringence in the viewing-angle enlarging film 41. Specifically, the viewing-angle enlarging film 41 taught in Japanese Unexamined Patent Publication No. 49925/1997 (Tokukaihei 9-49925) includes the smooth section a that is provided between the convex section d and the convex section d. In this case, the light beam passing through the smooth section a and the light beam passing through the upper flat section b of the convex section d are different in optical path length. Therefore, the image contrast is degraded due to the residual birefringence in the viewing-angle enlarging film 41.

Further, the viewing-angle enlarging film 41 is provided to the TN-liquid crystal cell 42 on its observer's side. This brings a problem that significant moire is generated due to misalignment between a pitch of the TN-liquid crystal cells 42 and a pitch of the convex sections d of the viewing-angle enlarging film 41.

In order to reduce moire, the pitch of the convex sections d of the viewing-angle enlarging film 41 1 is arranged to be shorter than one pixel of the TN-liquid crystal cell 42, or equal to approximately two to three pixels of the liquid crystal cell, for example. Further, in the case where the pitch of the convex sections d is shorter than one pixel of the TN-liquid crystal cell 42, the size of that one pixel is arranged not to be an integer multiple of the pitch of the convex sections d. If the size is to be an integral multiple, the size of that one pixel is arranged to be at least five times greater than the pitch of the convex sections d.

This is, however, not sufficient as countermeasure against moire, and there may be a case where further countermeasure is required, for example, that a clearance is provided between the viewing-angle enlarging film 41 and the TN-liquid crystal cell 42. This, however, brings a problem that the display panel becomes thicker.

Further, according to the technique of Japanese Unexamined Patent Publication No. 2003-294912 mentioned above, the microlens array of a second layer is produced by use of the microlens array of a first layer. Therefore, uniformity in shape of the microlenses of the second layer greatly depends upon that of the microlenses of the first layer. For this reason, it is difficult to achieve uniformity in shape of the microlenses of the two layers.

DISCLOSURE OF INVENTION

The present invention is in view of the above problems, and has as an object to provide a non self-illuminant type display apparatus with a high front-luminance and a wide viewing-angle, and a method for manufacturing the display apparatus.

In order to solve the above problems, the display panel of the present invention is adapted so that the display panel includes: a backlight that supplies light used in displaying; a pixel-formed panel including a plurality of pixels arranged in matrix, a light shielding section that shields light emitted from the backlight, and an aperture section via which light emitted from the backlight transmits; and a microlens array including a plurality of microlenses each converging, to the aperture section light emitted from the backlight, the microlens having a width, in a direction parallel to a display surface of the display panel, equal to a pixel pitch in the direction, and the microlens being arranged to cause light that comes from the backlight and is incident on a top section of the microlens to transmit while maintaining substantially same intensity and direction.

In the above structure, the microlens allows the light that comes from the backlight and is incident on the top section of the microlens to transmit while maintaining substantially the same intensity and direction. Therefore, a light beam that is incident on the top section of the microlens transmits to a front, without bending, and then is emitted from the display panel. This results in an increase of light beams that travel to the front, and therefore the front luminance is maintained high in the liquid crystal display apparatus 20. Further, if entering via an area other than the top section of the microlens, a light beam is bent and thus travels in an oblique direction with respect to the display panel. This allows the viewing angle to become wider.

Further, in the above structure, the microlens is formed to have a width, in a direction parallel to the display surface of the display panel, equal to a pixel pitch in the direction. This allows the light that comes from the backlight and enters the microlens array to be totally converged by the microlens, in regard to this direction, and therefore light utilization efficiency is improved.

In order to solve the above problems, the method for manufacturing a display panel according to the present invention is adapted so that the method for manufacturing a display panel including: a backlight that supplies light used in displaying; a pixel-formed panel including a plurality of pixels arranged in matrix, a light shielding section that shields light emitted from the backlight, and an aperture section via which light emitted from the backlight transmits; and a microlens array including a plurality of microlenses each converging, to the aperture section light emitted from the backlight, includes the steps of: (i) forming a photopolymerizing polymer layer on a surface of the pixel-formed panel; (ii) hardening a section of the photopolymerizing polymer layer by use of light that transmits through the aperture section; and (iii) eliminating, after the step (ii), an unhardened portion of the photopolymerizing polymer layer so as to form the microlens.

With the above method, the microlens is patterned by hardening the photopolymerizing polymer with the use of light that transmits through the aperture section. This allows the microlens to be formed in a self-alignment manner with respect to the aperture section. As such, no misalignment is caused between the microlens and the pixel, or the sub-pixel. Furthermore, no misalignment is caused neither in the pitch between pixels nor in the pitch between microlenses. Therefore, no moire is generated between the pixels and the microlenses. Accordingly, the light-converging function of the microlens is sufficiently demonstrated, while no moire is generated. Therefore, it is possible to produce a display apparatus that allows displaying with high luminance.

BRIEF DESCRIPTION OF DRAWINGS

Figure 1 is a cross sectional diagram schematically illustrating a structure of a liquid crystal display apparatus according to an embodiment of the present invention.

Figure 2(a) is a cross sectional diagram illustrating (i) a shape of a microlens provided to a liquid crystal display apparatus according to an embodiment of the present invention and (ii) an optical path of light that enters the microlens.

Figure 2(b) is a cross sectional diagram illustrating (i) a microlens having a spherical shape and (ii) an optical path of light that enters the microlens.

Figure 3 is a graph showing a luminance distribution of emitted light, in relation to (i) a microlens provided to a liquid crystal display apparatus according to an embodiment of the present invention and (ii) a microlens having a spherical shape.

Figure 4 is a cross sectional diagram showing a relationship between (i) a shape of a microlens and (ii) a shape of a sub-pixel aperture section in a liquid crystal display apparatus according to an embodiment of the present invention.

Figure 5 is a graph showing a relationship between (i) an angle ratio of (a) a spread angle of light emitted from the backlight to (b) an tolerable angle of the microlens and (ii) light utilization efficiency $\eta$.

Figure 6 is a graph showing a relationship between (i) an angle ratio of (a) a spread angle of light emitted from the backlight to (b) an tolerable angle of the microlens and (ii) a front luminance.

Figure 7(a) is a cross sectional diagram illustrating a step of manufacturing a liquid crystal display apparatus according to an embodiment of the present invention.

Figure 7(b) is a cross sectional diagram illustrating a step of manufacturing a liquid crystal display apparatus according to an embodiment of the present invention.

Figure 7(c) is a cross sectional diagram illustrating a step of a method for manufacturing a liquid crystal display apparatus according to an embodiment of the present invention.

Figure 7(d) is a cross sectional diagram illustrating a step of a method for manufacturing a liquid crystal display apparatus according to an embodiment of the present invention.

Figure 8(a) is a front diagram of a liquid crystal display apparatus 20.

Figure 8(b) is a cross sectional diagram taken along cross section A-A' in Figure 8(a).

Figure 8(c) is a cross sectional diagram taken along cross section B-B' in Figure 8(a).

Figure 9(a) is a cross sectional diagram for explaining a first example of a step of exposing in manufacturing a microlens provided to a liquid crystal display apparatus according to an embodiment of the present invention.

Figure 9(b) is a graph showing an exposure amount at respective points of a photopolymerizing polymer layer in the step of exposing in Figure 9(a).

Figure 10(a) is a cross sectional diagram for explaining a second example of the step of exposing in manufacturing a microlens provided to a liquid crystal display apparatus according to an embodiment of the present invention.

Figure 10(b) is a graph showing an exposure amount at respective points of photopolymerizing polymer layer in the step of exposing in Figure 10(a).

Figure 11 (a) is a cross sectional diagram for explaining a third example of the step of exposing in manufacturing a microlens that is to be provided to a liquid crystal display apparatus according to an embodiment of the present invention.

Figure 11 (b) is a graph showing an exposure amount at respective points of the photopolymerizing polymer layer in the step of exposing in Figure 11(a).

Figure 12 is a cross sectional diagram illustrating a structure in which a polarizer is adhered to a microlens provided to a liquid crystal display apparatus according to an embodiment of the present invention.

Figure 13(a) is a cross sectional diagram of a viewing-angle enlarging film provided to a conventional liquid crystal display.

Figure 13(b) is a cross sectional diagram illustrating a structure of a conventional liquid crystal display.

BEST MODE FOR CARRYING OUT THE INVENTION

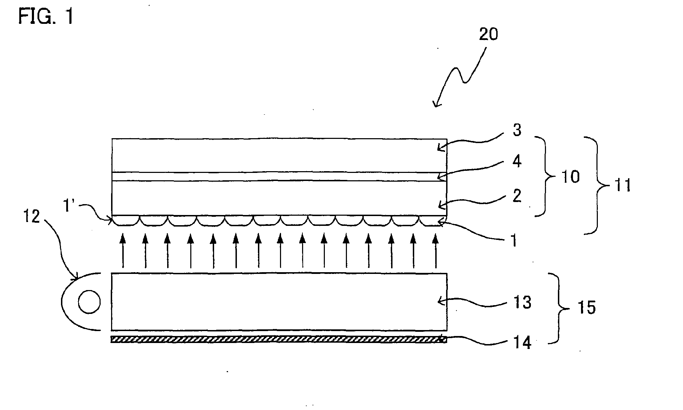

The following describes an embodiment of the present invention, with reference to figures. Figure 1 is a cross sectional diagram schematically illustrating a main section of a liquid crystal display panel (display panel) 11, and a main section of a liquid crystal display apparatus 20 including the liquid crystal display panel 11, according to the present embodiment. Note that the liquid crystal display apparatus 20 is a transflective liquid crystal display apparatus. The reflective liquid crystal display apparatus realizes a display under dark illumination by utilizing light of backlight that transmits through a liquid crystal display panel 11 in displaying, while realizing a display under bright illumination by reflecting light that enters a display surface from the surrounding area of the liquid crystal display panel 11. Thus, the liquid crystal display apparatus 20 is a non self-illuminant type display apparatus.

As illustrated in Figure 1, the liquid crystal display apparatus 20 includes the liquid crystal display panel 11 and a backlight 15 that is highly directive.

The liquid crystal display panel 11 includes a color liquid crystal panel (pixel-formed panel) 10 and a microlens array 1' provided on a surface of the TFT substrate 2, which surface is not facing the liquid crystal layer 4 (backlight 15 side). The color liquid crystal panel 10 includes a TFT substrate 2 on which a TFT, a pixel electrode and the like are provided, a liquid crystal layer 4, and an opposed substrate 3 that (i) faces the TFT substrate 2, with the liquid crystal layer 4 provided therebetween, and (ii) includes color filters R, G, B. The microlens array 1' is constituted of a plurality of microlenses 1. Further, a backlight 15 is provided in such a way as to face the microlens array 1' of the liquid crystal display panel 11.

The backlight 15 includes (i) a light source 12, (ii) a light guiding plate 13 that accepts light emitted from the light source 12, allows the light to transmit through the light guiding plate 13, and emits the light to the liquid crystal display panel 11 and (iii) a reflector 14 that reflects, to the light guiding plate 13, (a) the light emitted from a rear surface of the light guiding plate 13 and (b) light that comes from the outside of the liquid crystal display apparatus 20 and transmits through the liquid crystal display panel 11 or the light guiding plate 13.

Note that Figure 1 only shows main components, and components, such as a polarizer provided in front of and at a back of the liquid crystal display panel 11, are omitted in the figure.

Exemplary backlights that may be suitably used as the backlight of the liquid crystal display apparatus 20 include those taught in Japanese Unexamined Patent Publication No. 2003-35824 (publication date: February 7, 2003), Japanese Unexamined PCT Application Publication No. 511129/1996 (Tokuhyohei 8-511129) (publication date: November 19, 1996), "IDW '02 'Viewing Angle Control Using Optical Microstructures on Light-Guide Plate for Illumination System of Mobile Transmissive LCD Module', K. KALANTAR, pp.549-552", and "M.Shinohara et al., 'Optical Society of American Annual Meeting Conference Program', Vol.10, p.189, 1998", for example.

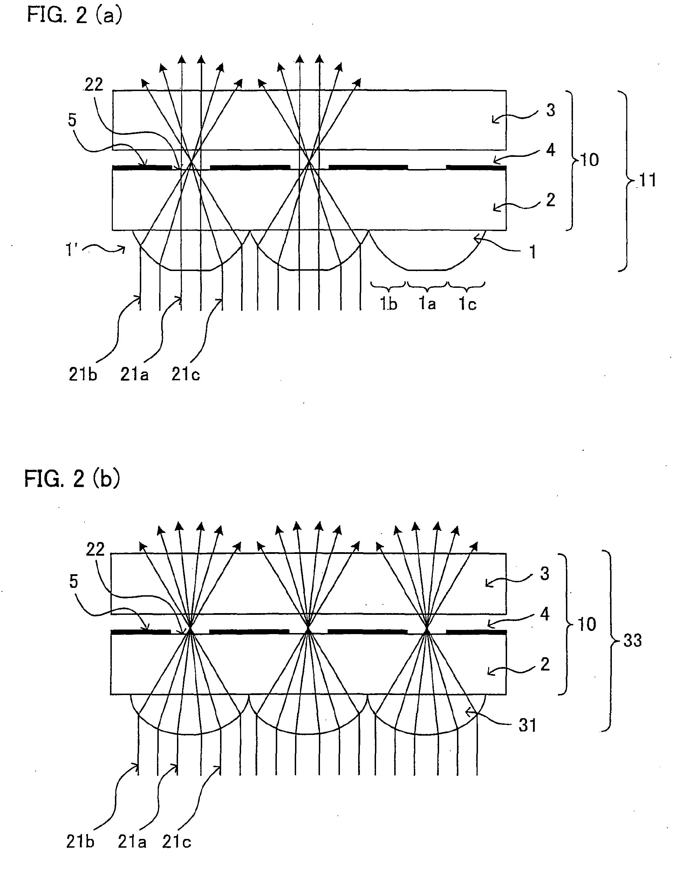

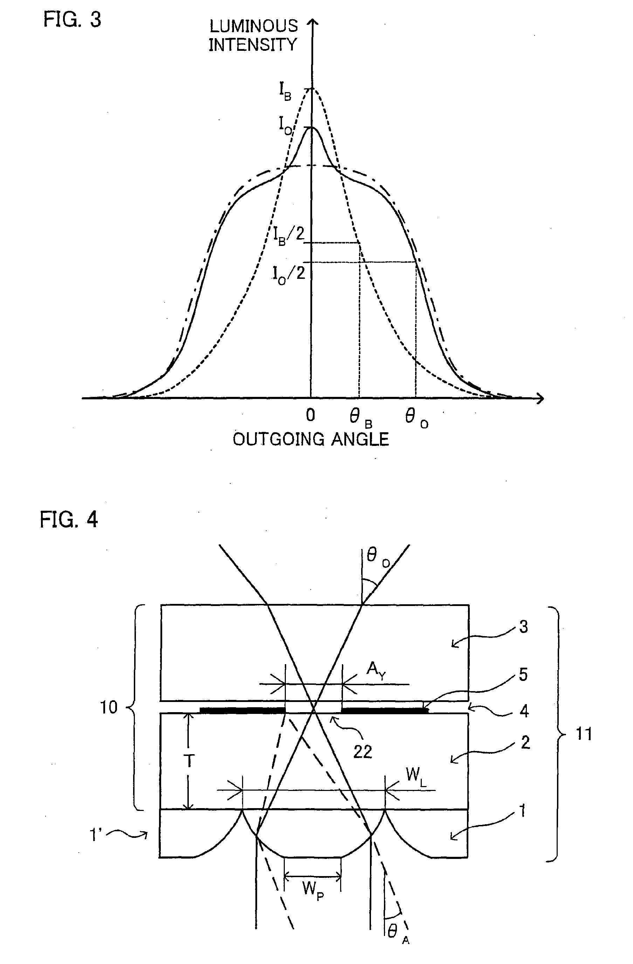

The following describes a shape and functions of the microlens array 1', with reference to Figures 2(a), 2(b), and 3. Figure 2(a) is a cross sectional diagram illustrating a shape of the microlens 1 and an optical path of light that enters the microlens 1, in the liquid crystal display apparatus 20. As illustrated in the figure, a top section of the microlens 1 has a flat shape. Figure 2(b) is a cross sectional diagram illustrating an optical path along which light that enters a spherical-shape microlens, in a conventional liquid crystal display apparatus. Figure 3 is a graph showing luminous-intensity distribution (luminance distribution) of emitted light, in relation to the microlens 1 and the spherical-shape microlens.

As shown in Figure 2(a), the microlens 1 has a shape of convex lens, and includes a flat section 1a at a top of the convex lens, and curved surface sections (circumferential part) 1b and 1c around the flat section 1a. The curved surface sections 1b and 1c have lens effect (light-converging effect). Further, as shown in the figure, a light shielding film (light shielding section, black matrix) 5 is formed on a surface of the TFT substrate 2, which surface is opposite to the surface on which the microlens array 1' is formed. The light shielding film 5 has a sub-pixel aperture section (aperture) 22, which has a certain degree of width, on an optical axis of the microlens 1.

After emitted, in a substantially vertical direction, from an emitting surface of the backlight 15, light beams 21a, 21b, 21c, which are highly directive, are led to the microlens 1. The light beam 21a that enters the microlens 1 via the flat section 1a transmits through the microlens 1 while maintaining substantially same intensity and direction. More specifically, the light beam 21a that enters the microlens 1 via the flat section 1a travels in the direction of the optical axis of the microlens 1, passes the sub-pixel aperture section 22, and then is emitted from the liquid crystal display panel 11 in a substantially vertical direction with respect to a display surface. On the other hand, the light beams 21b and 21 c that enter the microlens 1 via the curved surface sections 1b and 1c, respectively, are bent and converged at the sub-pixel aperture section 22. Then, the light beams 21b and 21c are angled and emitted from the liquid crystal display panel 11 to the display surface.

In the case where no microlens 1 is provided, light that illuminates an area other than the sub-pixel aperture section 22 is absorbed and scattered by the light shielding film 5. Therefore, the light is not efficiently utilized. On the other hand, if the microlens 1 is provided, the light illuminating the area other than the sub-pixel aperture section 22, i.e., light that is emitted from the backlight 15 toward the light shielding film 5, is led to the sub-pixel aperture section 22 by the microlens 1 and emitted from the liquid crystal display panel 11. This improves light utilization efficiency of the backlight 15. Further, the light that enters the microlens 1 via the flat section 1a is emitted from the liquid crystal display panel 11 while maintaining the same intensity and direction. This makes it possible by a lens structure of the microlens 1 to improve the light utilization efficiency while a front luminance is maintained high. Further, even though the liquid crystal display apparatus 20 employs the backlight 15, which is highly directive, the viewing angle is enlarged with the use of the microlens 1.

On the other hand, in the liquid crystal display panel 33 employing, in place of the microlens 1 of the liquid crystal display apparatus 20, a microlens 31 that has a spherical shape as shown in Figure 2(b), the light beam 21a, which passes through a central section (the vicinity of the top section) of the lens, is also converged, passes through the sub-pixel aperture section 22, and then is emitted from the liquid crystal display panel at a spread angle. This causes a decrease in light components that travel in the vertical direction with respect to the display surface of the liquid crystal display panel, compared to the case where no microlens is provided, and therefore the front luminance decreases. A high front luminance is necessary in consideration of the properties of the liquid crystal display panel. The lens with the spherical shape has this problem of decrease in the front luminance.

The following describes (i) a difference in a luminance distribution due to presence/absence of the microlens and difference in the structure of the microlens and (ii) an intensity distribution of light emitted from the liquid crystal display panel, with reference to Figure 3. The broken line in the figure indicates the intensity distribution of the light emitted from the liquid crystal display panel, in the case where the backlight 15, which is highly directive, and the liquid crystal display panel without a microlens are combined. The dashed line in the figure indicates the intensity distribution of the light emitted from the liquid crystal display panel, in the case where the backlight 15, which is highly directive, and the microlens having the spherical shape are used. The continuous line in the figure indicates the intensity distribution of the light emitted from the liquid crystal display panel 11 of the liquid crystal display apparatus 20 of the present embodiment, which liquid crystal display apparatus 20 employs a combination of the backlight 15, which is highly directive, and the microlens 1. Note that the figure shows the case where (i) a value of $R_\theta$ ($R_\theta = \theta_B/\theta_A$) that is a ratio of (a) an tolerable angle $\theta_A$ of the microlens 1 and (b) the spread angle $\theta_B$ of the light emitted from the backlight 15 is 2, and (ii) an aperture ratio $R_Y$ in the vertical direction with respect to the display surface of the liquid crystal display panel 11 is 0.4. The aperture ratio $R_Y$ is expressed by the formula $R_Y = A_Y/W_L$, where $A_Y$ is a width of the sub-pixel aperture section with respect to the direction in which light is converged by the microlens 1, and $W_L$ is a width of the microlens 1 with respect to the direction in which light is converged.

As shown in Figure 3, in the case where the microlens having the spherical shape is used (chain line in the figure), light utilization efficiency improves, and the viewing angle is enlarged, but the front luminance decreases, compared to the case where no microlens is provided (broken line in the figure).

On the other hand, in the case where the microlens 1 of the present invention is employed, the intensity distribution of emitted light is as shown by the continuous line in Figure 3. Specifically, the front luminance is maintained high, although the luminance decreases in the direction at an angle slightly out of the vertical direction.

The following describes a concrete combination of (a) the luminous intensity distribution of the backlight 15, (b) the shape of the microlens 1, and (c) the aperture ratio of the sub-pixel aperture section 22, the light utilization efficiency, and the front luminance, with reference to Figures 4 to 6.

Figure 4 is a cross sectional diagram showing a relationship between the shape of the microlens 1 and the shape of the sub-pixel aperture section 22. Here, a viewing angle $\theta_0$ (angle that is a half of the peak of luminous intensity in distribution of outgoing angle and luminous intensity in relation to emitted light from the liquid crystal display panel 11) of the liquid crystal display panel 11 is substantially equal to $\theta_L$, in the case where the numerical aperture section NA of the microlens 1 is expressed as $\sin\theta_L$. Further, the following formula is satisfied:

$$\sin\theta_L = nW_L / 2T$$

where n is the refractive index of the TFT substrate 2 on which the microlens 1 is formed, T is the thickness of the TFT substrate 2, and the $W_L$ is the width of the microlens 1 with respect to the direction in which light is converged.

Note that, in the present embodiment, the width $W_L$ of the microlens 1 with respect to the direction in which light is converged is equal to the pixel pitch. In this case, the pixel pitch is fixed. Therefore, if it is desired to expand the viewing angle of the liquid crystal display panel 1, it only needs to reduce the thickness of the substrate. For example, in the case where the pixel pitch is 200 $\mu$m, and the viewing angle of 22° is necessary, if the refractive index of the TFT substrate 2 is 1.5, then the thickness of the TFT substrate 2 is 400 $\mu$m.

The following describes the light utilization efficiency of the light emitted from the backlight 15. The light utilization efficiency $\eta$ is defined as a ratio of light transmitting through the sub-pixel aperture section 22 with respect to light emitted from the backlight 15. In other words, the light utilization efficiency $\eta$ is expressed by

the formula below:

$$\eta = P_0 / P_1,$$

where, $P_1$ is the amount of light emitted from the backlight 15, and $P_0$ is the amount of light that transmits through the sub-pixel aperture section 22.

Higher directivity of the backlight 15 is preferable to achieve high light utilization efficiency with a display panel including a microlens, such as the liquid crystal display panel 11. In other words, a smaller expansion angle $\theta_B$ (angle that is a half of the peak of luminous intensity in luminous intensity distribution of light emitted from the backlight) of the light emitted from the backlight is preferable. On the other hand, with regard to the sub-pixel aperture section (transmissive aperture) 22 in a pixel, the wider the aperture section is, the higher the light utilization efficiency becomes. However, the properties of a reflective type are also important for the transflective liquid crystal panel. For this reason, the aperture ratio of the transmitting aperture section 22 in a pixel is restrained. In many cases, the transflective liquid crystal panel has the aperture ratio of 20% to 30%.

The following describes conditions for achieving high light utilization efficiency under this restraint. The tolerable angle $\theta_A$ of the light that enters the microlens 1 is expressed as the formula below:

$$\sin\theta_A = nA_Y / 2T$$

where $A_Y$ is the total width of the sub-pixel aperture section 22 (transmissive aperture section of pixel) with respect to the direction in which light is converged by the microlens 1. Note that parallel light that enters the microlens 1 at an angle equal to or smaller than $\theta_A$ with respect to the optical axis of the microlens 1 passes through the sub-pixel aperture section 22, and this $\theta_A$ is defined as the tolerable angle of the microlens 1.

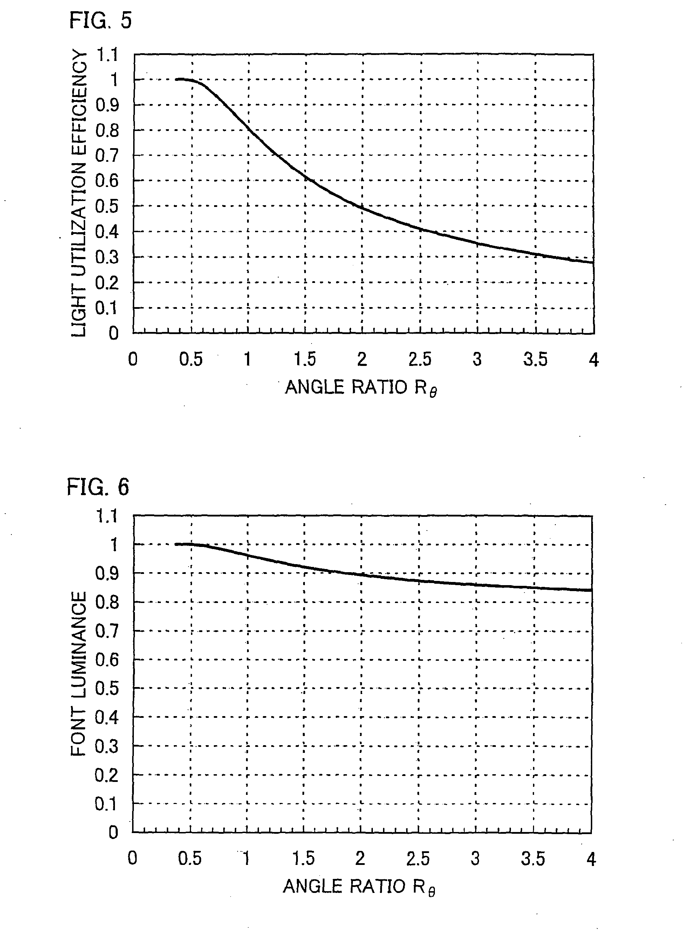

Figure 5 is a graph showing a relationship between (i) an angle ratio $R_\theta$ of the spread angle $\theta_B$ of the light emitted from the backlight with respect to the tolerable angle $\theta_A$ of the microlens and (ii) the light utilization efficiency $\eta$. Note that, in Figure 5, $R_\theta$ is defined as the ratio of $\theta_B$ to $\theta_A$ ($R_\theta = \theta_B/\theta_A$), and the luminous intensity distribution of the backlight follows a $\cos^4\theta$ distribution. It is apparent from the figure that the light utilization efficiency $\eta$ is approximately 100% when $R_\theta = 0.5$, $\eta$ is approximately 80% when $R_\theta = 1$, $\eta$ is approximately 60% when $R_\theta = 1.5$, and $\eta$ is approximately 50% when $R_\theta = 2$. In other words, if the spread angle $\theta_B$ of the light emitted from the backlight is smaller than the tolerable angle $\theta_A$ of the microlens, significantly high light utilization efficiency $\eta$ is achieved.

On the other hand, in the case where no microlens is provided, the light utilization efficiency η is substantially same as the aperture ratio $R_Y$ ($R_Y = A_Y/W_L$) in the direction Y. For example, η is 40% when $R_Y = 0.4$. It is thus apparent from Figure 5 that it is necessary to satisfy the condition of $R_\theta < 2.5$ where the light utilization efficiency η is approximately 40%, in order to improve the light utilization efficiency η by providing the microlens. In other words, if the spread angle $θ_B$ of the light emitted from the backlight is set equal to or smaller than a double of the tolerable angle $θ_A$ of the microlens, the light utilization efficiency becomes more improved than that of the structure in which the microlens is not provided.

Note that, if $R_\theta ≈ 2.5$, effect that can be achieved by providing the microlens is not so significant. It is practically effective and preferable that the light utilization efficiency in the case where the microlens is provided is equal to or greater than 1.2 times of that in the case where no microlens is provided. To achieve this, the luminous intensity distribution of the backlight and the shape of the microlens are combined such that at least $R_\theta \leq 2$ is satisfied. Specifically, the spread angle $θ_B$ of the light emitted from the backlight is set equal to or smaller than a double of the tolerable angle $θ_A$ of the microlens. In this case, the light utilization efficiency η is approximately 50% or greater, and therefore is 1.2 times or greater than that in the case where no microlens is provided.

For example, in order to achieve a 1.2 times or greater light utilization efficiency η by using a backlight having the spread angle $θ_B$ of 15° and providing the microlens, it is suitable to provide a microlens with the tolerable angle $θ_A$ of 7.5° or wider. The smaller the aperture ratio $R_Y$ and the spread angle $θ_B$ of the light emitted from the backlight are, the more the light utilization efficiency η is improved by providing the microlens. For example, if a structure with $R_Y$ of 0.3 and $R_\theta$ of 1 is selected, and the microlens is provided, then the light utilization efficiency η becomes 2.7 times greater.

Meanwhile, if a microlens is provided, the front luminance of the liquid crystal display panel decreases. Figure 6 is a graph showing a relationship between $R_\theta$ and the front luminance $I(R_\theta)$ in the liquid crystal display apparatus having the microlens with the spherical shape. Note that, in Figure 6, the front luminance $I(O)$ in the case where $R_\theta = 0$, in other words where no microlens is provided, is defined as 1. Under the conditions where $R_\theta$ is 1.5 to 2.0, the front luminance $I(R_\theta)$ decreases approximately ten percent lower than that in the case where no microlens is provided. To restrain the decrease in the front luminance $I(R_\theta)$, a flat surface may be made at a top section of the microlens.

It is most effective to select a width $W_P$ of the flat surface with respect to the direction in which light is converged, which flat surface is at the top section of the microlens, that is equal to the width $A_Y$ of the sub-pixel aperture section (sub-pixel transmissive aperture) 22 with respect to the direction in which light is converged. If $W_P$ and $A_Y$ are equal, light that vertically enters the flat surface at the top of the microlens passes through the sub-pixel aperture section (pixel transmissive aperture) 22 as the way it is. Therefore, the front luminance would not fluctuate depending upon the present/absence of the lens. On the other hand, if $W_P$ is wider than $A_Y$, the front luminance is maintained high, but the light utilization efficiency decreases because the light that vertically enters the flat surface at the top of the lens is partially rejected at the sub-pixel aperture section 22. Further, the wider $W_P$ becomes than $A_Y$, the lower light utilization efficiency becomes.

On the other hand, if $W_P$ is smaller than $A_Y$, the front luminance decreases although the light utilization efficiency does not decrease. If the area of the flat surface at the top of the microlens becomes narrower and narrower, the effect of improvement in the front luminance is lost. At this time, the relationship of the front luminance $I_P$, $W_P$, and $A_Y$ follows the formula below, if the luminous intensity distribution of the backlight conforms to the $\cos^4\theta$ distribution:

$$I_P = I(R_\theta) + W_P / A_Y (1 - I(R_\theta)).$$

To keep the decrease in the front luminance 8% or below, $W_P$ is set at least 1/5 times (0.2 times) wider and one time or narrower than $A_Y$. By this way, it becomes possible to keep the decrease in the front luminance 8% or below without causing the light utilization efficiency to decrease. Note that, although the foregoing described an exemplary case where the luminous intensity distribution of the backlight follows the $\cos^4\theta$ distribution, the same conditions may be applied to almost all backlights because, in many cases, the luminous intensity distribution of backlights mostly conforms to the $\cos^4\theta$ distribution.

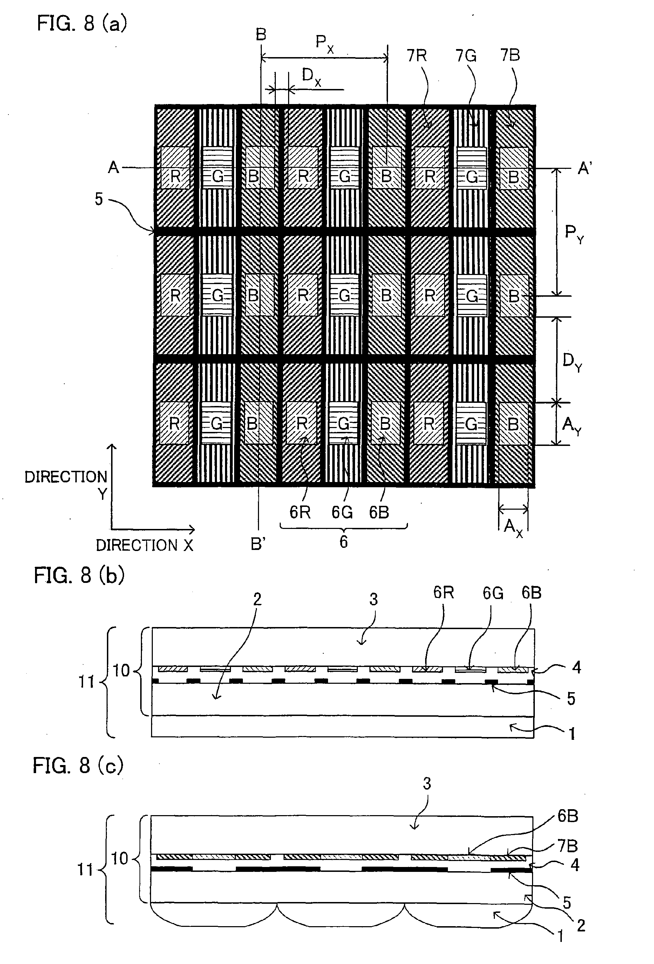

Figures 8(a) to 8(c) are a front diagram and cross sectional diagrams that illustrate an arrangement of sub-pixels in the liquid crystal display apparatus 20. Specifically, Figure 8(a) is a front diagram of the liquid crystal display apparatus 20, Figure 8(b) is a cross sectional diagram taken along cross section A-A' of Figure 8(a), and Figure 8(c) is a cross sectional diagram taken along cross section B-B' of Figure 8(a). Note that the microlens array 1' of the present embodiment is realized by lenticular lens.

As illustrated in Figure 8(a), one pixel 6 of the liquid crystal display apparatus 20 is constituted of a sub-pixel R, a sub-pixel B, and a sub-pixel G. A light shielding film (black matrix) 5 (light shielding region) is provided around each sub-pixel. Further, each sub-pixel includes a reflecting section and a transmitting section. Specifically, the sub-pixel R includes a reflecting section 7R and a transmitting section 6R, the sub-pixel B includes a reflecting section 7B and a transmitting section 6B, and the sub-pixel G includes a reflecting section 7G and a transmitting section 6G. Note that each length of the respective transmitting sections 6R, 6B, 6G, which length is parallel to the display surface is equal to a length of a sub-pixel aperture section 22 that corresponds to the respective transmitting sections 6R, 6B, 6G, which length is parallel to the display surface. Further, pixels 6 are arranged in matrix to form columns (direction X) and rows (direction Y). Here, the case is exemplified where a pixel pitch Px in the direction X and a pixel pitch $P_Y$ in the direction Y are both 200 $\mu$m. In the case of a TFT type display apparatus, typically, a column direction (direction X) is parallel to a gate bus line, whereas a row direction (direction Y) is parallel to a source bus line (video line).

Further, as illustrated in Figures 8(b) and 8(c), the microlens array 1' that the liquid crystal display panel 11 includes is formed with the microlens 1. The microlens 1 is constituted of a plurality of lenticular lenses that are arranged in such a way as to correspond to columns of a plurality of pixels. In other words, the microlens 1 is constituted of belt-shaped lenses (lenticular lens) that extend in the column direction (direction X). The microlens 1 converges light in the row direction (direction Y) but does not converge light in the column direction (direction X).

Further, as illustrated in Figure 8(c), the microlens 1 is provided, one for each of the pixels, such that an interface of adjacent microlenses 1 comes at a central section between adjacent pixels in the row direction (direction Y) (the lens is thinnest in film thickness at the central section between the adjacent pixels). In other words, the width of the respective microlenses 1 in the row direction is equal to the pixel pitch of the respective pixels in the row direction, and the adjacent microlenses 1 come into contact with each other at the central section between adjacent pixels.

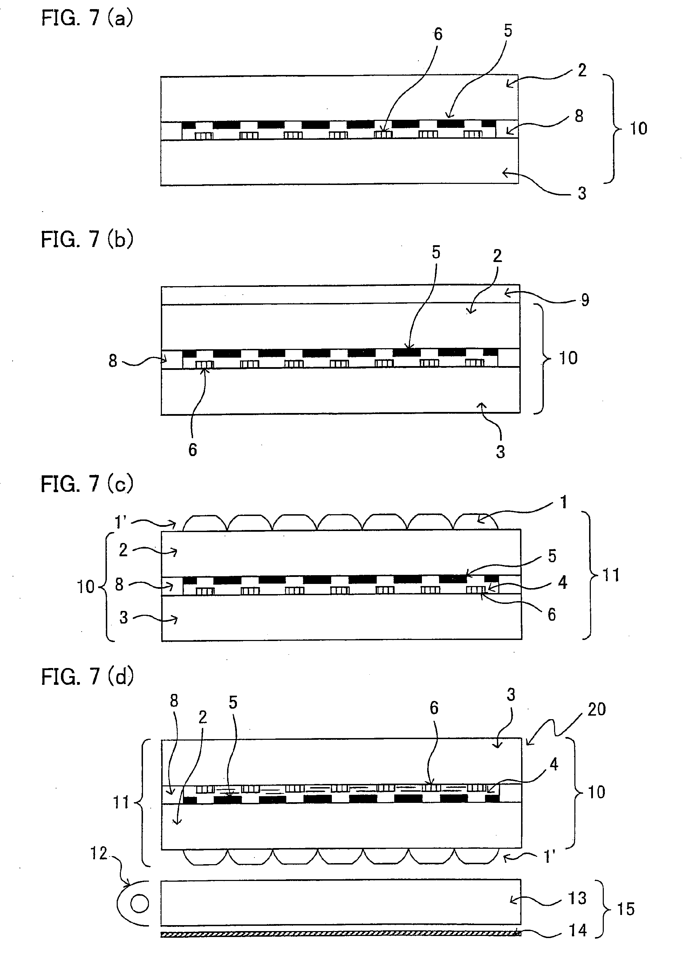

The following describes a method for manufacturing the liquid crystal display apparatus 20, with reference to Figures 7(a) to 7(d). Figures 7(a) to 7(d) are cross sectional diagrams for schematically explaining the steps of manufacturing the microlens array 1'.

As shown in Figure 7(a), a color liquid crystal panel (pixel-formed panel) 10 is prepared. The color liquid crystal panel 10 includes a TFT substrate 2 and an opposed substrate 3 on which color filters R, G, B are formed. A predetermined liquid crystal layer 4 is formed in an area between the TFT substrate 2 and the opposed substrate 3, which area is sealed by a sealing resin 8. Circuit components (none of which is illustrated), such as pixel electrodes arranged in matrix so as to correspond to the sub-pixels, a TFT connected to the pixel electrodes, a gate bus line, and a source bus line, and the light shielding film (light shielding layer) 5 are formed on a surface of the TFT substrate 2, which surface is on the liquid crystal layer 4 side. Further, transmitting sections 6R, 6G, 6B and an opposed electrode are formed on a surface of the opposed substrate 3, which surface is on the liquid crystal layer 4 side. The transmitting sections 6R, 6G, 6B include color filters of R(red), G(green), B(blue), respectively. Further, an alignment layer (not illustrated) is formed, when necessary, on a surface of the TFT substrate 2 and a surface of the opposed substrate 3, both of which surfaces are in contact with the liquid crystal layer 4.

Next, as illustrated in Figure 7(b), photopolymerizing polymer is applied onto the TFT substrate 2 of the color liquid crystal panel 10 prepared in Figure 7(a), thereby forming a photopolymerizing polymer layer 9. In this case, photopolymerizing polymer is used that has a photosensitive wavelength in the range of 380 nm to 420 nm. Note that it is preferable to modify the surface by, for example, applying a silane coupling agent to a glass surface of the RFT substrate 2, for the purpose of improving adhesiveness between the photopolymerizing polymer layer 9 and the TFT substrate 2.

For example, the following may be used as the photopolymerizing polymer: an acrylic monomer, such as urethane acrylate, epoxy acrylate, polyester acrylate, and polyether acrylate; and a mixed component prepared by mixing an epoxy monomer with an initiator.

This is followed by exposing and hardening the photopolymerizing polymer layer 9 with light that transmits through a sub-pixel on which the color filter of blue is formed. When light enters the photopolymerizing polymer layer 9, the photopolymerizing polymer senses the light and is hardened, depending on the amount of the light. In the case where light is illuminated for a fixed period of time, the photopolymerizing polymer is hardened in accordance with the luminous intensity distribution. In other words, a distribution of degree of hardness is formed. Therefore, it is possible to form the distribution of the degree of hardness in the photopolymerizing polymer layer 9 by adjusting the distribution of light amount (luminous intensity distribution and/or illuminating time). Note that the luminous intensity distribution here means a distribution of intensity of light that is caused to enter the color liquid crystal display panel to expose the photosensitive material, with respect to an angle (incident angle) to a normal line of a surface of the color liquid crystal display panel. An incident angle to the sub-pixel of blue corresponds, one on one, to a position from which the light enters the photosensitive-material layer.

The luminous intensity distribution is adjusted by, for example, changing the incident angle of illumination light for exposure. In other words, the luminous intensity distribution is adjusted by relatively moving a light source that emits the illumination light for exposure, and the photopolymerizing polymer layer 9. For example, the distribution of illuminating time is adjusted by scanning the illumination light for exposure. It is possible to combine the adjustments described above. It is also possible to adjust the luminous intensity distribution by using a photomask with a predetermined distribution of transmissivity. It is also possible to form a microlens, for example a lenticular lens, that corresponds to a sub-pixel R and a sub-pixel G, both of which are included in the same pixel as the sub-pixel B (i.e., microlens corresponding to pixel), by causing the illumination light for exposure to obliquely enter the photopolymerizing polymer layer 9 via the sub-pixel B of blue, as shown in Figures 8(b) and (c). Depending upon the properties of the color filters, there may be a case where the illumination light for exposure leaks from the sub-pixel R and the sub-pixel G, and the photopolymerizing polymer senses the light. In this case, the lenticular lens is formed if the exposure is performed with the consideration of the amount of light leakage.

Then, the photopolymerizing polymer layer 9 thus exposed is developed to eliminate unhardened portions. The unhardened portions are eliminated by, for example, melting the unhardened portions with the use of a organic solvent such as acetone. By this way, the microlens 1 is obtained that is constituted of a lenticular lens having a shape of hardened portions, or, a shape corresponding to the distribution of the degree of hardness, as shown in Figure 7(c). Note that it is preferable that the hardened portions (portions that become the lenticular lens) of the photopolymerizing polymer layer 9 be illuminated with the illumination light for exposure after the developing step, in order to further harden the photopolymerizing polymer to bring it into a completely-hardened state. It is also possible to combine light-hardening and heat-hardening.

Thereafter, as shown in Figure 7(d), the backlight 15, in which the light source 12, the light guiding plate 13, and the reflector 14 are combined, and the liquid crystal display panel 11, on which the microlens array 1' is formed, are combined to complete the liquid crystal display apparatus 20.

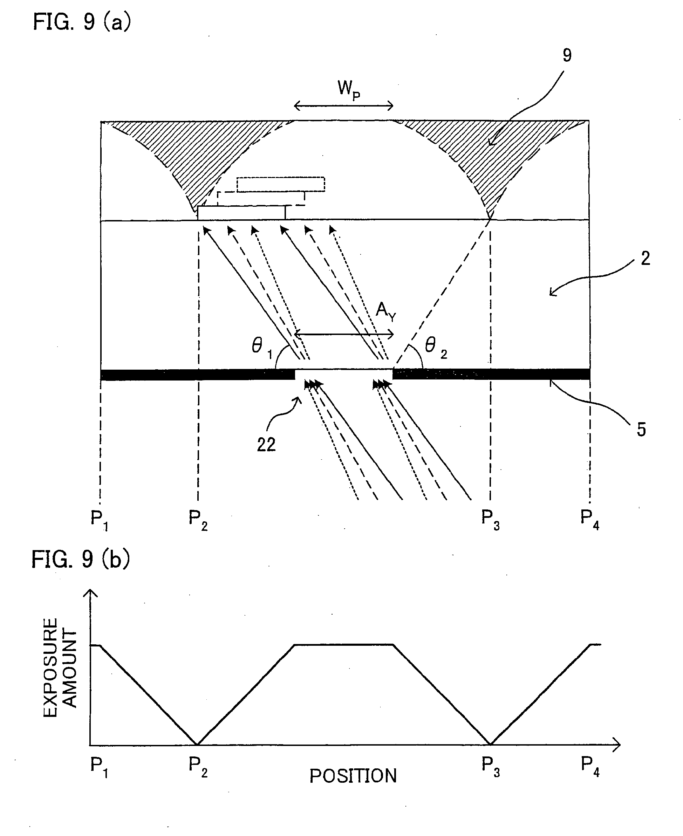

The following more specifically describes the exposing step for forming a lens shape of the microlens 1. Figure 9(a) is a cross sectional diagram for explaining the exposing step. Figure 9(b) is a graph showing an exposure amount at respective points of the photopolymerizing polymer layer 9 in the exposing step.

As shown in Figure 9(a), the incident angle of the illumination light is changed from a direction defined by $\theta_1$ to a direction defined by $\theta_2$, in a plane including line B-B' in Figure 8(a). Specifically, the incident angle of the illumination light is changed, continuously or step-by-step, from $\theta_1$ to $\theta_2$ in the plane including line B-B'.

The following considers the case where parallel light is used as the illumination light for exposure, and the incident angle of the illumination light is changed at a constant angular velocity. Note that if parallel light is used as the illumination light for exposure, it becomes easy to control the exposure-amount distribution at the respective points of the photopolymerizing polymer layer 9, and therefore becomes easy to control the shape of the microlens 1. Specifically, the distributions of the exposure amount at the respective points are uniformed, so that the shapes of the microlenses 1 are uniformed. In this case, the distributions of the exposure amount at the respective points of the photopolymerizing polymer layer 9 to which the illumination light is illuminated become as shown in Figure 9(b). If this is overlapped with the sensitivity curve (exposure amount - film thickness of hardened portion) of the photopolymerizing polymer, then the microlens is obtained that has the shape as indicated by the broken line in Figure 9(a). In the exposing step, there is generated, at the central section a region where the exposure amount is fixed, so that a flat surface (flat section 1a) is produced at the central section of the microlens 1. If the width $A_Y$ of the sub-pixel aperture section (transmissive aperture) 22 with respect to the direction in which light is converged is 45% or below of the lens width, a flat surface having a width $W_P$, with respect to the direction in which light is converged, that is at least 1/5 of $A_Y$ is produced by the control in the exposing step. However, if the width $A_Y$ of the sub-pixel aperture section 22 with respect to the direction in which light is converged by the lens, becomes wider, the width of the flat surface (flat section 1a) with respect to the direction in which light is converged by the lens, which flat surface is at the central section of the microlens, becomes narrower.

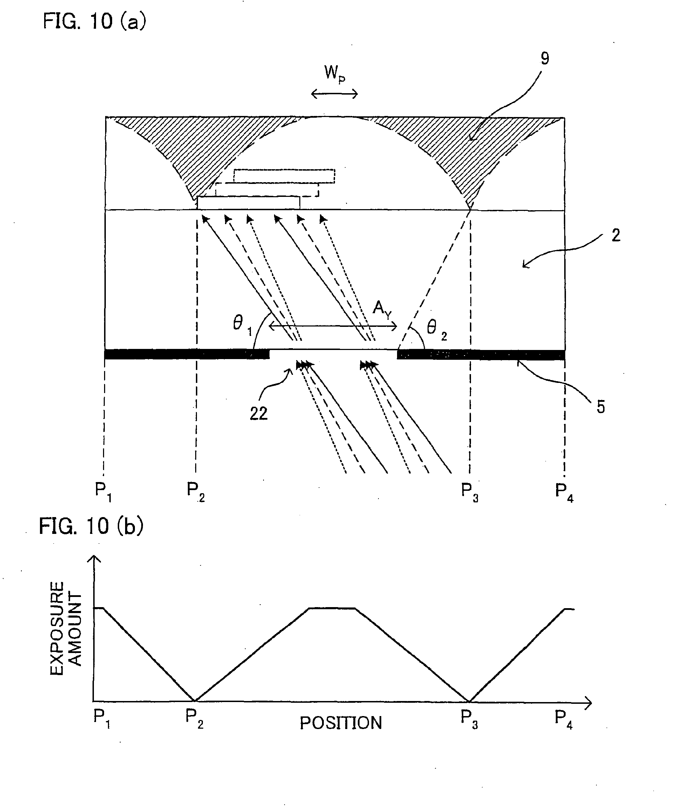

Figure 10(a) is a cross sectional diagram for explaining the exposing step in the case where the width $A_Y$ of the sub-pixel aperture section 22 with respect to the direction in which light is converged by the lens is widened. Figure 10(b) is a graph showing the exposure amount at the respective points of the photopolymerizing polymer layer 9 in the exposing step.

As shown in Figure 10(a), if the width $A_Y$ of the sub-pixel aperture section 22 with respect to the direction in which light is converged by the lens becomes wider, a greater area of the photopolymerizing polymer is exposed when the illumination light is caused to enter at a fixed incident angle. For this reason, the exposure-amount distribution becomes as shown in Figure 10(b). Specifically, a region where the exposure-amount distribution varies becomes wider, whereas a region where the exposure amount is constant becomes narrower. Therefore, the width $W_P$ of the flat surface (flat section 1a) with respect to the direction in which light is converged by the lens, which flat surface is at a center of the lens, becomes significantly narrower than the width $A_Y$ of the sub-pixel aperture section 22 with respect to the direction in which light is converged by the lens. As a result, the front luminance is degraded.

If, however, the film thickness (layer thickness) of the photopolymerizing polymer layer 9 is controlled in advance before the exposure is performed, it is still possible to form the microlens 1 having the flat section 1a with a desired width $W_P$, even if the width $A_Y$ of the transmissive aperture section with respect to the direction in which light is converged by the lens becomes wider. Specifically, the photopolymerizing polymer whose thickness is same as a desired lens thickness is applied, and an exposure-amount distribution is given that causes excess exposure at the central section of the lens. By this way, the microlens 1 is formed that has the flat section 1a with the desired width $W_P$.

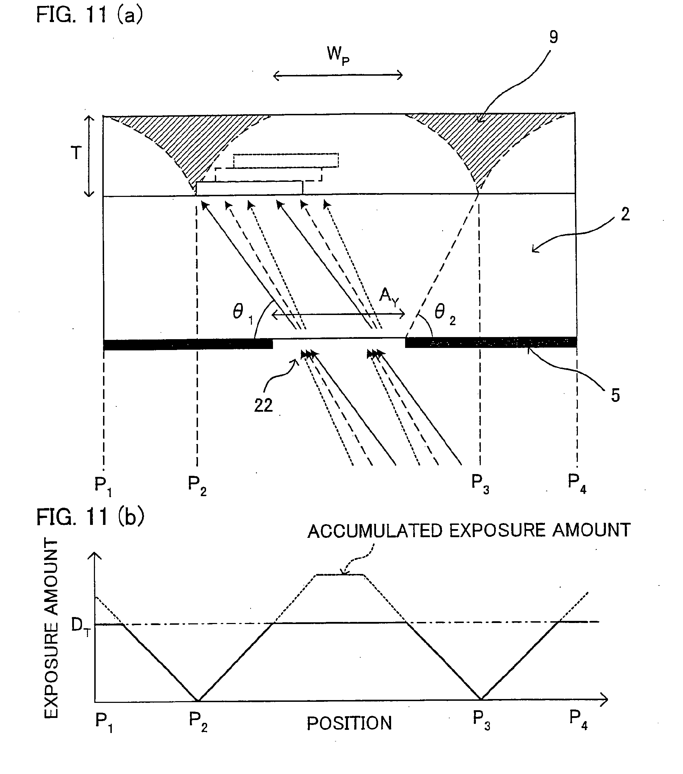

Figure 11(a) is a cross sectional diagram for explaining the exposing step in the case where the film thickness T of the photopolymerizing polymer to be applied is matched with a desired lens thickness. Figure 10 (b) is a graph showing amounts of exposure at respective points of the photopolymerizing polymer layer 9 in the exposing step.

In Figure 11(b), $D_T$ indicates a necessary exposure amount for exposing and hardening the photopolymerizing polymer layer 9 of the film thickness T, and the dot line indicates an accumulated exposure amount at the photopolymerizing polymer layer 9 on the sub-pixel aperture section 22. If the exposure-amount distribution is set, in the region where the flat surface (flat section 1a) is to be formed, such that the accumulated exposure amount exceeds $D_T$, the flat section 1a with the desired flat section width $W_P$ is formed, even if the transmissive aperture section width $A_Y$ becomes wider.

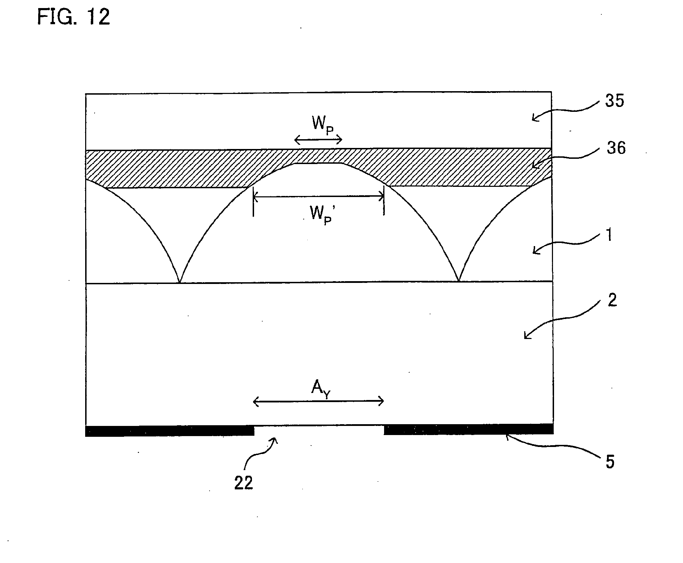

Further, normally, a pair of polarizers are adhered and fixed to both surfaces of the liquid crystal panel. If a foreign substance is sandwiched between the liquid crystal panel and any one of the polarizers, the foreign substance disturbs polarization, and the disturbed part becomes an obvious black point. Therefore, normally, the liquid crystal panel and the polarizers are adhered such that no foreign substance is sandwiched therebetween. At this time, it is possible to control the width of the flat section 1a with respect to the direction in which light is converged by the lens, by controlling the thickness of the adhesive layer. The following describes such controlling method, with reference to Figure 12.

Figure 12 is a cross sectional diagram illustrating a structure in which a polarizer is adhered to the microlens 1. As illustrated in the figure, a sub-pixel aperture section 22 and a light shielding film 5 are formed on a surface of the TFT substrate 2, which surface is on the liquid crystal layer side. Further, the microlens array 1' is formed on the opposite surface of the TFT substrate 2, which opposite surface is on the opposite side to the liquid crystal layer. Further, a polarizer 35 is adhered to the microlens array 1', having an adhesive layer 36 therebetween.

When the polarizer 35 is adhered to the microlens array 1' with the use of the adhesive layer 36, a top section of the microlens 1 is pushed into the adhesive layer 36. The difference in refractive index between the air and the microlens is 0.5 or greater. Therefore, a light beam that passes through the interface is given strong lens power. However, the difference in the refractive index at a region where the microlens 1 comes contact with the adhesive layer 36 is approximately 0.1, and therefore is smaller than that between the air and the microlens 1. Accordingly, the lens function at the region where the microlens 1 comes contact with the adhesive layer 36 becomes extremely small. Thus, the light that comes from the backlight 15 and enters the region transmits through the microlens 1 while maintaining substantially the same intensity and direction, and then transmits through the sub-pixel aperture section 22. In other words, the region works in the same manner as in the case where the flat section 1a is provided, as illustrated in Figures 9 (a) and 11(a), for example.

Therefore, it is possible to control the front luminance of the liquid crystal display apparatus 20 by controlling the area where the microlens 1 is in contact with the adhesive layer 36. Specifically, in the case where the polarizer 35 is adhered onto the microlens array 1' constituted of the microlenses 1 each having the flat section 1a with the width $W_P$ that is shorter than the width $A_Y$ of the sub-pixel aperture section (transmissive aperture), it is possible to control a contact width $W_P'$ with respect to the direction in which light is converged by controlling the thickness of the adhesive layer 36, at which width $W_P'$ the microlens 1 and the adhesive layer 36 are in contact. The structure in which the microlens 1 and the polarizer 35 are combined has the same optical characteristics as the microlens 1 that has, at the top section thereof, the flat section 1a whose width is $W_P'$ with respect to the direction in which light is converged. This makes it possible to improve the front luminance.

Note that, although the polarizer 35 is adhered onto the microlens array 1' with the use of the adhesive layer 36 in the above description, the structure is not limited to what described above. It is also possible to, for example, adhere other members such as a protection layer, in place of the polarizer 35, to the adhesive layer 36. Alternatively, it is also possible to form only the adhesive layer 36 on the microlens array 1', without adhering other components. In other words, it is possible to form only a layer that causes the refractive index to be small at the region where the layer comes contact with the microlens 1.

Further, the material of the adhesive layer 36 is not particularly limited, as long as the material has light transmissivity and causes the refractive index to be small at the region where the material comes contact with the microlens 1. Further, in the case where such adhesive layer 36 is provided, light that enters the contact region where the microlens and the adhesive layer 36 are in contact transmits through the microlens 1 while maintaining substantially the same intensity and direction. For this reason, it is not mandatory to provide the flat section 1a to the microlens 1. For example, if a spherically-shaped microlens is used, and the adhesive layer 36 is provided in such a way as to contact with a predetermined region at a top section of the microlens, substantially the same effect is achieved as in the case where the microlens 1 having the flat section 1a is used.

Further, it is preferable in the exposing step that the incident angles $\theta_1$ and $\theta_2$ be set such that microlenses 1 are formed without a space between adjacent microlenses 1. Thus, it is preferable that the incident angles $\theta_1$ and $\theta_2$ be suitably set, depending upon (i) the pixel pitch of the liquid crystal display panel 11 and (ii) the thickness and the refractive index of the respective layers of the TFT substrate 2, the opposed substrate 3, and the liquid crystal layer 4, in such a way that (i) an outer edge of an area of the photopolymerizing polymer layer 9 illuminated by light that transmits through a sub-pixel B of a pixel and (ii) an outer edge of an area of the photopolymerizing polymer layer 9 illuminated by light that transmits through a pixel B of an adjacent pixel meet at a central section between the pixels, as illustrated in Figure 9(a). By this way, an interface of the microlenses 1 comes at the central section between the pixels (the film thickness of the lens becomes the thinnest at the central section between adjacent pixels), and therefore the microlenses 1 are formed without a space between adjacent ones thereof.

The following describes how the illumination light is scanned. Note that, in the present description, the term "scan" includes (i) two-dimensionally scanning the area that is to be illuminated by the illumination light for exposure and (ii) changing the incident angle of the illumination light. Further, it is only necessary in the scanning that a positional relationship and an angle between the illumination light and the photopolymerizing polymer layer 9 are relatively changed. Thus, the liquid crystal display panel 11 to which photopolymerizing polymer is applied may be moved, or alternatively, the light source of the illumination light may be moved.

The lenticular lens according to the present embodiment does not condense light in the direction that the color filter is arranged. For this reason, the scanning is performed in the direction X (parallel direction to cross section A-A' shown in Figure 8(a)) such that the exposure-amount distribution (illumination intensity of light for exposure X exposure time) becomes uniform, whereas the scanning in the direction Y (parallel direction to cross section B-B' shown in Figure 8(a)) is performed such that the exposure-amount distribution becomes as shown in Figure 9(b). This exposure-amount distribution is given by controlling the intensity of the illumination light and the scanning speed.

As described above, the liquid crystal display apparatus 20 according to the present embodiment includes the microlens array 1' constituted of a plurality of microlenses 1 each having the flat section 1a at its top section. In this structure, the light from the backlight 15 is led to the microlens array 1', is incident on the flat section 1a at a center of the lens, transmits to a front without bending, is led to the sub-pixel aperture section 22, and then is emitted from the liquid crystal display panel 11. This brings a consequence that more light beams travel to the front, and therefore the front luminance of the liquid crystal display apparatus 20 is maintained high.

On the other hand, a light beam that is incident on the curved surface sections 1b, 1c of the lens is bent, and travels in an oblique direction with respect to the liquid crystal display panel 11. Therefore, the viewing angle becomes wider.

Further, the lens width of the microlens 1 is formed to be the same as the pixel pitch. This causes the light that enters a surface of the microlens array 1' to be entirely converged by the microlens 1, in regard to the direction of the lens width, and then led to the sub-pixel aperture section 22. Therefore, high light utilization efficiency is obtained. Further, an optical-path length of a light beam that transmits through the microlens is approximately the same throughout the microlens array 1'. Therefore, it is not necessary to concern about residual birefringence of the lens material.

Further, the microlens array 1' is patterned by hardening the photopolymerizing polymer with the use of the light that transmits through the sub-pixel aperture section 22. This allows the microlens to be patterned in a self-alignment manner. It is easy to maintain high uniformity in shape of the sub-pixel aperture section 22. As such, the microlens array 1' with high uniformity in shape is formed at extremely low costs. Further, the microlens 1 is formed in the self-alignment manner with respect to the pixels or the sub-pixels, so that no misalignment is caused between the microlens 1 and the pixels, or sub-pixels. Furthermore, no misalignment is caused neither in the pitch between pixels nor in the pitch between microlenses. Therefore, no moire is generated between the pixels and the microlens array 1'. Accordingly, the light-converging function of the microlens 1 is sufficiently demonstrated, while no moire is generated. Therefore, it is possible to produce a display apparatus that allows displaying with high luminance.

Note that, in the case where the microlens 1 constituted of the lenticular lens is employed, no light-converging effect is present in the direction where the color filter is arranged (direction X), and therefore the effect of improving the brightness with the use of the microlens 1 is degraded. However, in the liquid crystal display panel, a distance ($D_Y$) between transmitting sections of adjacent pixels (and sub-pixels) along the row direction (direction along which the source bus line (video line) extends) is normally wider than a distance Dx between transmitting sections of adjacent pixels (and sub-pixels) along the column direction (direction X), as shown in Figure 8(a). In other words, the brightness is improved more effectively in the case where a lens having the light-converging effect in the direction Y is employed than in the case where a lens having the light-converging effect in the direction X is employed. Furthermore, even if there is no light-converging effect in the direction X, the effect of improving the brightness does not decrease significantly.

Certainly, although the present embodiment employs the lenticular lens that has the light-converging effect only in one direction, the present invention is not limited to this arrangement. It is also possible to apply the present invention to a microlens that has the light-converging effect both in the direction X and in the direction Y. In other words, it is also possible to provide a microlens array constituted of a plurality of microlenses each of which is provided for each sub-pixel and has light-converging function (light-converging effect) in plural directions. In the exposing step described above, the control is performed such that the exposure-amount distribution in the direction X becomes constant. If the exposure-amount distribution is controlled such that the lens is also formed in this direction, a microlens array is obtained that includes microlenses, each of which has light-converging effect both in the direction X and in the direction Y and is provided for each sub-pixel.

Note that the exposing step may be performed before liquid crystal material is filled into the liquid crystal layer 4 of the liquid crystal display panel 11. In this case, however, the microlens array 1' is heated to, for example, one hundred and several tens °C during a thermal processing step for alignment of the liquid crystal material, which step is performed after the liquid crystal material is filled in. For this reason, it is preferable to use resin, as the photopolymerizing polymer, that does not cause a change due to the thermal processing, such as change-in-shape and peel-off, which change may affect the light-converging effect of the microlens 1.

Further, although the microlens array 1' is formed on the TFT substrate 2 side in the present embodiment, the arrangement is not limited to this arrangement. Alternatively, the microlens array 1' may be formed on the opposed substrate 3 side. In this case, the backlight 15 is provided on the opposed substrate 3 side.

Further, although the liquid crystal display panel 11 including the color filter is used in the present embodiment, the present invention is not limited to this arrangement. The present invention is also applicable to a display apparatus, such as a guest-host type liquid crystal display apparatus, that realizes color display by using dye and the like that is mixed in a display medium layer (liquid crystal layer).

Further, the present invention is applicable not only to a TFT-type liquid crystal display apparatus but also to a liquid crystal display apparatus using an MIM liquid crystal display and to a passive-type liquid crystal display apparatus including no switching device.

Further, the present invention is applicable not only to a liquid crystal display panel but also to other non self-illuminant type display panels (e.g., electrochromic display panel, electrophoretic display panel, toner display panel, PLZT panel).

In order to solve the above problems, the display panel of the present invention is adapted so that the display panel includes: a backlight that supplies light used in displaying; a pixel-formed panel including a plurality of pixels arranged in matrix, a light shielding section that shields light emitted from the backlight, and an aperture section via which light emitted from the backlight transmits; and a microlens array including a plurality of microlenses each converging, to the aperture section light emitted from the backlight, the microlens having a width, in a direction parallel to a display surface of the display panel, equal to a pixel pitch in the direction, and the microlens being arranged to cause light that comes from the backlight and is incident on a top section of the microlens to transmit while maintaining substantially same intensity and direction.

In the above structure, the microlens allows the light that comes from the backlight and is incident on the top section of the microlens to transmit while maintaining substantially the same intensity and direction. Therefore, a light beam that is incident on the top section of the microlens transmits to a front, without bending, and then is emitted from the display panel. This results in an increase of light beams that travel to the front, and therefore the front luminance is maintained high in the liquid crystal display apparatus 20. Further, if entering via an area other than the top section of the microlens, a light beam is bent and thus travels in an oblique direction with respect to the display panel. This allows the viewing angle to become wider.

Further, in the above structure, the microlens is formed to have a width, in a direction parallel to the display surface of the display panel, equal to a pixel pitch in the direction. This allows the light that comes from the backlight and enters the microlens array to be totally converged by the microlens, in regard to this direction, and therefore light utilization efficiency is improved.

Further, the microlens may include, at the top section of the microlens, a flat section that is substantially parallel to the display surface of the display panel. This allows the light that comes from the backlight and is incident on the top section of the microlens to transmit while maintaining substantially the same intensity and direction. Therefore, the front luminance is maintained high. Further, if entering via an area other than the top section of the microlens, a light beam is bent and travels in an oblique direction with respect to the display panel. This allows the viewing angle to become wider.

Further, an adhesive layer may be provided on a backlight-side surface of the microlens array, and is provided so as to be in contact with the top section of the microlens by a predetermined width in the direction, the adhesive layer being made of a material that causes a smaller difference in refractive index between the material and the microlens array than a difference in refractive index between air and the microlens. The above structure allows the light that comes from the backlight and is incident on the top section of the microlens to transmit while maintaining substantially the same intensity and direction. Therefore, the front luminance is maintained high. Further, if entering via an area other than the top section of the microlens, a light beam is bent and travels in an oblique direction with respect to the display panel. This allows the viewing angle to become wider.

Further, each of the plurality of pixels includes at least one sub-pixel, arranged vertically with respect to the direction, each including (a) a reflecting section that reflects light coming from a surrounding area of the display panel and (b) a transmitting section via which light, emitted from the backlight and having passed through the aperture section, transmits. With the above structure, it becomes possible to realize a transflective display panel that is high in front luminance and wide in viewing angle.

Further, it is preferable that an angle at which light emitted from the backlight is spread be less than or equal to 2.5 times a tolerable angle of the microlens. With the above structure, it becomes possible to improve the light utilization efficiency in the display panel, compared to a structure without a microlens.

Further, it is preferable that a section of the microlens, through which section light that comes from the backlight and is incident on the top section of the microlens transmit while maintaining substantially same intensity and direction, is at least 0.2 times and is not more than, in width in the direction, the transmitting section of each of the at least one sub-pixel. With the above structure, it becomes possible to restrain a decrease in the front luminance at 8% or below, without causing the light utilization efficiency to decrease.

Further, the microlens may include, at the top section of the microlens, a flat section that is substantially parallel to the display surface of the display panel; and the transmitting section of each of the at least one sub-pixel is 45% or below, in width in the direction, of the at least one sub-pixel. With the above structure, it is easy to form the flat section of the microlens in such a way as to be at least 0.2 times wider, in width in the direction, than the transmitting section. By this way, a display panel is realized that allows a decrease in front luminance to be restrained at 8% or below without causing the light utilization efficiency to decrease.

Further, the direction may be a row direction or a column direction, in which direction a distance between transmitting sections of adjacent ones of the plurality of pixels arranged in matrix is longer; and the microlens array includes a plurality of lenticular lenses, arranged vertically with respect to the direction, that cause incident light to be converged in the direction.

In the above structure, a lenticular lens is provided that has the light-converging function in a direction where the distance between the transmitting sections of the adjacent pixels is longer. This improves the light utilization efficiency, and therefore enhances an effect of improving the brightness.

Further, the microlens array may include a plurality of microlenses that are provided correspondingly to each of the at least one sub-pixel, and have a light-converging function in plural directions. With the above structure, it becomes possible to converge the light that comes from the backlight and is emitted to the aperture section corresponding to the transmitting section of each sub-pixel, and light shielding sections adjacent to the aperture section along plural directions, to the transmitting section of the sub-pixel. It thus becomes possible to further improve the light utilization efficiency.

In order to solve the above problems, the method for manufacturing a display panel according to the present invention is adapted so that the method for manufacturing a display panel including: a backlight that supplies light used in displaying; a pixel-formed panel including a plurality of pixels arranged in matrix, a light shielding section that shields light emitted from the backlight, and an aperture section via which light emitted from the backlight transmits; and a microlens array including a plurality of microlenses each converging, to the aperture section light emitted from the backlight, includes the steps of: (i) forming a photopolymerizing polymer layer on a surface of the pixel-formed panel; (ii) hardening a section of the photopolymerizing polymer layer by use of light that transmits through the aperture section; and (iii) eliminating, after the step (ii), an unhardened portion of the photopolymerizing polymer layer so as to form the microlens.

With the above method, the microlens is patterned by hardening the photopolymerizing polymer with the use of light that transmits through the aperture section. This allows the microlens to be formed in a self-alignment manner with respect to the aperture section. As such, no misalignment is caused between the microlens and the pixel, or the sub-pixel. Furthermore, no misalignment is caused neither in the pitch between pixels nor in the pitch between microlenses. Therefore, no moire is generated between the pixels and the microlenses. Accordingly, the light-converging function of the microlens is sufficiently demonstrated, while no moire is generated. Therefore, it is possible to produce a display apparatus that allows displaying with high luminance.

Further, in the step (i), a layer thickness of the photopolymerizing polymer layer may be controlled to form the microlens in such a way that a width, in a direction parallel to a display surface of the display panel, of the microlens is equal to a pixel pitch in the direction.

With the above method, it becomes possible to form the microlens to have a width, in a direction parallel to a display surface of the display panel, equal to a pixel pitch in the direction. Accordingly, the light that comes from the backlight and enters the microlens array is entirely converged to the aperture section by the microlens, in terms of the direction. Therefore, a display panel is realized that is high in light utilization efficiency.

Further, in the step (i), a layer thickness of the photopolymerizing polymer layer may be controlled in such a way that, in the step (ii), a fixed amount of exposure is performed with respect to a section of the photopolymerizing polymer layer so as to form a microlens having a flat section at a top part.

With the above method, it becomes easy to form a microlens having a flat section at a top section thereof. In this case, the microlens allows the light that comes from the backlight and enters the top section of the microlens to transmit while maintaining substantially same intensity and direction. Therefore, a display panel is realized that is high in front luminance. Further, if entering via an area other than the top section of the microlens, a light beam is bent and travels in an oblique direction with respect to the display panel. This allows the viewing angle to become wider.

Further, it is preferable that a layer thickness of the photopolymerizing polymer layer be controlled in such a way that the flat section is at least 0.2 times wider and at most one time wider, in width in a direction parallel to a display surface of the display panel, than the aperture section. By this way, a display panel is realized that allows a decrease in front luminance to be restrained at 8% or below without causing the light utilization efficiency to decrease.

Further, the aperture section may be 45% or below, in width in the direction, of an arrangement pitch of the aperture section. In this case, the flat section of the microlens is formed in such a way as to be at least 2.5 times wider, in width in the direction, than the aperture section. Therefore, a display panel is realized that allows a decrease in front luminance to be restrained at 8% or below without causing the light utilization efficiency to decrease.

Further, the method may further include the step of forming an adhesive layer on a backlight-side surface of the microlens array in such a way that an area where the adhesive layer is in contact with a top section of the microlens is at least 0.2 times wider and at most one time wider, in width in a direction parallel to a display surface of the display panel, than the aperture section the adhesive layer being made of a material that causes a smaller difference in refractive index between the material and the microlens array than a difference in refractive index between air and the microlens. In this case, the light that comes from the backlight and enters the top section of the microlens is allowed to transmit while maintaining substantially same intensity and direction. Therefore, a display panel is realized that is high in front luminance. Further, if entering via an area other than the top section of the microlens, a light beam is bent and travels in an oblique direction with respect to the display panel. This allows the viewing angle to become wider.

Further, the step (ii) may be performed by use of parallel light during exposure. If parallel light is used as the illumination light for exposure, it becomes easy to control the exposure-amount distribution at respective points of the photopolymerizing polymer layer. This makes it easy to control the shape of the microlens.

The present invention is not limited to the description of the embodiments above, but may be altered by a skilled person within the scope of the claims. An embodiment based on a proper combination of technical means disclosed in different embodiments is encompassed in the technical scope of the present invention.

INDUSTRIAL APPLICABILITY

The present invention is applicable to a non self-illuminant type display panel, such as a liquid crystal display panel, an electrochromic display panel, an electrophoretic display panel, a toner display panel, and a PLZT panel.

**Claims**

1. A display panel, comprising: a backlight that supplies light used in displaying; a pixel-formed panel including a plurality of pixels arranged in matrix, a light shielding section that shields light emitted from the backlight, and an aperture section via which light emitted from the backlight transmits; and a microlens array including a plurality of microlenses each converging, to the aperture section light emitted from the backlight,
the microlens having a width, in a direction parallel to a display surface of the display panel, equal to a pixel pitch in the direction, and
the microlens being arranged to cause light that comes from the backlight and is incident on a top section of the microlens to transmit while maintaining substantially same intensity and direction.

2. The display panel according to Claim 1, wherein the microlens includes, at the top section of the microlens, a flat section that is substantially parallel to the display surface of the display panel.

3. The display panel according to Claim 1, further comprising an adhesive layer that is provided on a backlight-side surface of the microlens array, and is provided so as to be in contact with the top section of the microlens by a predetermined width in the direction,
the adhesive layer being made of a material that causes a smaller difference in refractive index between the material and the microlens array than a difference in refractive index between air and the microlens.

4. The display panel according to Claim 1, wherein each of the plurality of pixels includes at least one sub-pixel, arranged vertically with respect to the direction, each including (a) a reflecting section that reflects light coming from a surrounding area of the display panel and (b) a transmitting section via which light, emitted from the backlight and having passed through the aperture section, transmits.

5. The display panel according to Claim 1, wherein an angle at which light emitted from the backlight is spread is less than or equal to 2.5 times a tolerable angle of the microlens.

6. The display panel according to Claim 4, wherein a section of the microlens, through which section light that comes from the backlight and is incident on the top section of the microlens transmits while maintaining substantially same intensity and direction, is at least 0.2 times and is not more than, in width in the direction, the transmitting section of each of the at least one sub-pixel.

7. The display panel according to Claim 6, wherein:

   the microlens includes, at the top section of the microlens, a flat section that is substantially parallel to the display surface of the display panel; and
   the transmitting section of each of the at least one sub-pixel is 45% or below, in width in the direction, of the at least one sub-pixel.

8. The display panel according to Claim 4, wherein:

   the direction is a row direction or a column direction, in which direction a distance between transmitting sections of adjacent ones of the plurality of pixels arranged in matrix is longer; and
   the microlens array includes a plurality of lenticular lenses, arranged vertically with respect to the direction, that cause incident light to be converged in the direction.

9. The display panel according to Claim 4, wherein the microlens array includes a plurality of microlenses that are provided for respective one of the at least one sub-pixel, and the microlens array causes incident light to be converged in a plurality of directions.

10. A method for manufacturing a display panel comprising: a backlight that supplies light used in displaying; a pixel-formed panel including a plurality of pixels arranged in matrix, a light shielding section that shields light emitted from the backlight, and an aperture section via which light emitted from the backlight transmits; and a microlens array including a plurality of microlenses each converging, to the aperture section light emitted from the backlight, the method comprising the steps of:

    (i) forming a photopolymerizing polymer layer on a surface of the pixel-formed panel;
    (ii) hardening a section of the photopolymerizing polymer layer by use of light that transmits through the aperture section; and
    (iii) eliminating, after the step (ii), an unhardened portion of the photopolymerizing polymer layer so as to form the microlens.

11. The method according to Claim 10, wherein, in the step (i), a layer thickness of the photopolymerizing polymer layer is controlled to form the microlens in such a way that a width, in a direction parallel to a display surface of the display panel, of the microlens is equal to a pixel pitch in the direction.

12. The method according to Claim 10, wherein, in the step (i), a layer thickness of the photopolymerizing polymer layer is controlled in such a way that, in the step (ii), a fixed amount of exposure is performed with respect to a section of the photopolymerizing polymer layer so that a microlens having a flat section is formed at a top section of the microlens.

13. The method according to Claim 12, wherein a layer thickness of the photopolymerizing polymer layer is controlled in such a way that the flat section is at least 0.2 times and is not more than, in width in a direction parallel to a display surface of the display panel, the aperture.

14. The method according to Claim 13, wherein the aperture section is 45% or below, in width in the direction, of an arrangement pitch of the aperture.

15. The method according to Claim 10, further comprising the step of forming an adhesive layer on a backlight-side surface of the microlens array in such a way that an area where the adhesive layer is in contact with a top section of the microlens is at least 0.2 times and is not more than, in width in a direction parallel to a display surface of the display panel, the aperture section,
   the adhesive layer being made of a material that causes a smaller difference in refractive index between the material and the microlens array than a difference in refractive index between air and the microlens.

16. The method according to Claim 10, wherein the step (ii) is performed by use of parallel light during exposure.

FIG. 1

FIG. 2 (a)

FIG. 2 (b)

FIG. 3

FIG. 4

## FIG. 5

## FIG. 6

**FIG. 7 (a)**

**FIG. 7 (b)**

**FIG. 7 (c)**

**FIG. 7 (d)**

FIG. 8 (a)

DIRECTION Y

DIRECTION X

FIG. 8 (b)

FIG. 8 (c)

FIG. 9 (a)

FIG. 9 (b)

FIG. 10 (a)

FIG. 10 (b)

FIG. 11 (a)

FIG. 11 (b)

FIG. 12

FIG. 13 (a)

FIG. 13 (b)

## INTERNATIONAL SEARCH REPORT

| | International application No. |
|---|---|
| | PCT/JP2005/003483 |

A. CLASSIFICATION OF SUBJECT MATTER
   Int.Cl$^7$ G02F1/1335, 1/13357

According to International Patent Classification (IPC) or to both national classification and IPC

B. FIELDS SEARCHED

Minimum documentation searched (classification system followed by classification symbols)
   Int.Cl$^7$ G02F1/1335, 1/13357

Documentation searched other than minimum documentation to the extent that such documents are included in the fields searched
   Jitsuyo Shinan Koho          1922-1996   Jitsuyo Shinan Toroku Koho   1996-2005
   Kokai Jitsuyo Shinan Koho    1971-2005   Toroku Jitsuyo Shinan Koho   1994-2005

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 11-109417 A  (Sharp Corp.),<br>23 April, 1999 (23.04.99),<br>& US 2001/0020991 A1 | 1,4,9<br>2,3,5-8,10,<br>15,16 |
| Y | JP 9-49925 A  (Sekisui Chemical Co., Ltd.),<br>18 February, 1997 (18.02.97),<br>(Family: none) | 2,5-8 |
| Y<br>A | JP 6-130205 A  (Fujitsu Ltd.),<br>13 May, 1994 (13.05.94),<br>(Family: none) | 10,15,16<br>11-14 |
| Y | JP 9-127309 A  (Toray Industries, Inc.),<br>16 May, 1997 (16.05.97),<br>(Family: none) | 3,15 |

☐ Further documents are listed in the continuation of Box C.  ☐ See patent family annex.

| | |
|---|---|
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| 01 June, 2005 (01.06.05) | 21 June, 2005 (21.06.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11109417 A
- JP 9049925 A
- JP 2003294912 A
- JP 2003035824 A
- JP 8511129 W
- JP 8511129 A

**Non-patent literature cited in the description**

- **K. KALANTAR.** *Viewing Angle Control Using Optical Microstructures on Light-Guide Plate for Illumination System of Mobile Transmissive LCD Module,* 549-552
- **M. SHINOHARA et al.** *Optical Society of American Annual Meeting Conference Program,* 1998, vol. 10, 189